(19) Europäisches Patentamt
European Patent Office
Office européen des brevets

(11) Veröffentlichungsnummer : **0 224 743**
**B1**

(12) # EUROPÄISCHE PATENTSCHRIFT

(45) Veröffentlichungstag der Patentschrift : **22.02.89**

(51) Int. Cl.[4] : **B 01 J 20/02**, G 21 F 9/12, C 01 B 25/45, C 02 F 1/28

(21) Anmeldenummer : **86115317.9**

(22) Anmeldetag : **05.11.86**

(54) **Verfahren zur Abtrennung von Kationen aus wässrigen Lösungen durch Zusatz von Crandallit.**

(30) Priorität : **03.12.85 DE 3542640**

(43) Veröffentlichungstag der Anmeldung : **10.06.87 Patentblatt 87/24**

(45) Bekanntmachung des Hinweises auf die Patenterteilung : **22.02.89 Patentblatt 89/08**

(84) Benannte Vertragsstaaten : **BE CH DE ES FR GB LI SE**

(56) Entgegenhaltungen :
**US-A- 3 155 454**
**CHEMICAL ABSTRACTS, Band 80, 1974, Seite 532, Zusammenfassung Nr. 140626k, Columbus, Ohio, US; P.G. SLADE: "Synthesis of crandallite CaAl6H[(OH)6/(PO4)2]", & NEUES JAHRB. MINERAL., MONATSH. 1974, (1), 22-7**
**JAPANESE PATENTS GAZETTE, Derwent Publications, Sektion J p2, Woche X36, Nr. 67472X/36, 13. Oktober 1976; & JP-A-50 051 090 (KYOTO UNIVERSITY) 07-05-1975**

(73) Patentinhaber : **Nukem GmbH**
**Rodenbacher Chaussee 6 Postfach 11 00 80**
**D-6450 Hanau 11 (DE)**

(72) Erfinder : **Brunner, Herbert, Dr.**
**Grünaustrasse 15**
**D-6450 Hanau 9 (DE)**
Erfinder : **Ballhorn, Reinhard, Dr.**
**Darmstädterstrasse 72**
**D-6053 Obertshausen 2 (DE)**
Erfinder : **Schwab, Roland, Prof. Dr.**
**Talblick 6**
**D-8502 Weiherhof (DE)**

**EP 0 224 743 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Abtrennung von Kationen der Gruppen Erdalkalimetalle Lanthaniden, Actiniden, Eisenmetalle, Titan, Zirkonium, Hafnium, Chrom, Molybdän, Wolfram, Vanadium, Niob, Tantal, Aluminium und Blei aus wässrigen Lösungen mit Hilfe einer mineralischen Verbindung.

In der Kerntechnik werden zur Reinigung von wässrigen Lösungen, die Spaltprodukte oder sonstige Radionuklide enthalten, Ionenaustauscher eingesetzt, die im Normalfall zusammen mit der radioaktiven Beladung konditioniert und endgelagert werden. Als Ionenaustauscher verwendet man entweder organische Kunstharze oder anorganische, mineralische Verbindungen, wie Zeolithe oder andere Alkalialuminiumsilikate. Diese Ionenaustauscher haben den Nachteil, daß die radioaktive Beladung relativ leicht wieder abgegeben werden kann, so daß auch in bekannten Konditionierungsmitteln, wie Zement oder Bitumen, eingeschlossene Ionenaustauscher nicht optimal auslaugbeständig bei der Lagerung in einem Endlager sind, insbesondere in einem Salzstock.

Minerale der Crandallit-Gruppe sind in der Natur weit verbreitet. Erst in jüngster Zeit haben diese ein zunehmendes Interesse gefunden, einmal durch ihre Einsatzmöglichkeit als phosphathaltiges Düngemittel nach vorheriger Calzinierung, als auch aufgrund ihres komplexen geochemischen Verhaltens, welches zu einer Anreicherung seltener Elemente in einem Umfang führen kann, die unter gewissen günstigen Voraussetzungen zur Bildung von Lagerstätten führt.

Die Phosphate der Crandallit-Gruppe besitzen die allgemeine Formel

$$MeAl_3 \cdot (PO_4)_2 \cdot (OH)_5 \cdot H_2O$$

(Me = Erdalkalimetalle oder sonstige zwei- und drei-wertige Metalle)

und treten als natürliche Minerale in reiner Form lediglich als Crandallit ($Me = Ca^{2+}$), Goyazit ($Me = Sr^{2+}$) und Gorceixit ($Me = Ba^{2+}$) auf. Fremdionen werden durch partielle Substitution von $Me^{2+}$ $Al^{3+}$ und $P^{5+}$ eingebaut, dabei substituieren große (> 1 Å) 2- und 3-wertige Kationen $Me^{2+}$, wie z. B. $Pb^{2+}$, $UO_2^{2+}$, $Ce^{3+}$ und $La^{3+}$, kleinere Kationen, wie z. B. $Fe^{3+}$, $Cr^{3+}$ das $Al^{3+}$, und $B^{3+}$, $S^{6+}$, $As^{5+}$ und $V^{5+}$ das $P^{5+}$ im Phosphat. Die formalen Endglieder dieser Mischphasen sind zwar zum Teil mit Mineralnamen belegt, wie Plumbogummit ($Me = Pb^{2+}$) oder Florencit ($Me = Ce^{3+}$), sind jedoch in reiner Form bisher weder als natürliche noch als synthetische Produkte bekannt.

Es war Aufgabe der Erfindung, ein Verfahren zur Abtrennung von Kationen der Gruppen Erdalkalimetalle, Lanthaniden, Actiniden, Eisenmetalle, Titan, Zirkonium, Hafnium, Chrom, Molybdän, Wolfram, Vanadium, Niob, Tantal, Aluminium und Blei aus wässrigen Lösungen mit Hilfe einer mineralischen Verbindung zu finden, bei dem die Kationen so fest in die mineralischen Verbindung eingebunden werden, daß sie nach einer entsprechenden Konditionierung auch über lange Zeiträume von Salzlösungen nicht ausgewaschen werden können.

Diese Aufgabe wurde erfindungsgemäß dadurch gelöst, daß als mineralische Verbindung ein Crandallit der allgemeinen Zusammensetzung

$$MeAl_3 \cdot (PO_4)_2 \cdot (OH)_5 \cdot H_2O$$

(Me = Erdalkalimetall)

bei pH-Werten oberhalb 6 und Temperaturen oberhalb 40 °C eingesetzt wird.

Vorzugsweise liegt bei der Kationenabtrennung der pH-Wert zwischen 8 und 11 und die Temperatur zwischen 50 und 70 °C.

Vorteilhafterweise werden synthetische Crandallite eingesetzt, die durch Umsetzung von Erdalkalimetallhydroxiden bzw. von in wässrigen Lösungen hydroxidbildenden Erdalkalisalzen und von Aluminiumhydroxid bzw. von hydroxidbildenden Aluminiumsalzen mit Phosphorsäure in den entsprechenden stöchiometrischen Mengenverhältnissen in wässriger Lösung bei pH-Werten zwischen 6 und 12 und Temperaturen zwischen 40 und 80 °C hergestellt worden sind. Vorzugsweise geht man hierbei von frisch gefälltem Aluminiumhydroxid aus und arbeitet bei pH-Werten zwischen 8 und 11.

Bewährt haben sich auch synthetische Crandallite, hergestellt durch Umsetzung von Erdalkalihydroxiden bzw. von hydroxidbildenden Erdalkalisalzen und von Aluminiumhydroxid mit Phosphorsäure in den entsprechenden stöchiometrischen Mengenverhältnissen unter Druck bei pH-Werten von 6 bis 12 und Temperaturen zwischen 180 und 220 °C. Vorzugsweise verwendet man hierbei als Aluminiumhydroxid kristallinen Bayerit und führt die hydrothermale Synthese bei pH = 7 durch.

Mit diesen synthetischen Crandalliten ist es möglich, eine Reihe von in radioaktiven Abwässern auftretende Kationen, wie z. B. $Ca^{2+}$, $Sr^{2+}$, $Ba^{2+}$, $Pb^{2+}$, $Al^{3+}$, $Ce^{3+}$, $La^{3+}$, $Fe^{3+}$, $Cr^{3+}$, $Th^{4+}$, $Zr^{4+}$ u. a., in sehr schwer löslicher Form zu binden und sie einer Endlagerung zuzuführen.

Die Abtrennung der Kationen aus wässriger Lösung erfolgt vorteilhafterweise, daß frisch hergestellter Crandallit in die wässrige Lösung eingegeben wird, die die abzutrennenden Kationen enthält. Dabei gibt man 1,5 bis 6 g Crandallit pro Gramm abzutrennende Kationen in die Lösung. Für die Abtrennung von Spuren der genannten Kationen wird mit einem Überschuß an Crandallit gearbeitet.

Anhand der folgenden Beispiele soll die Herstellung der synthetischen Crandallite und die Kationabtrennung mit Hilfe dieser Crandallite näher erläutert werden :

1. 30 m Mol frisch gefälltes Aluminiumhydroxid wurden in eine wässrige Strontiumnitratlösung (7,5 m Mol Strontium) eingerührt, anschließend mit 20 m Mol Phosphorsäure versetzt und unter Rühren mit Kalziumhydroxid neutralisiert. Die entstandene Suspension wurde dann 24 Stunden bei 60 °C gerührt. Gemäß der Reaktionsgleichung $3Al(OH)_3 + Sr(OH)_2 + 2H_3PO_4 \rightarrow SrAl_3 (PO_4)_2 \cdot (OH)_5 \cdot H_2O + 5H_2O$ erhält man einen sehr feinkristallinen Crandallit, der z. T. noch amorphe Phasen aufweist.

2. Ein Autoklav wurde mit 3,6 m Mol Phosphorsäure, 1 m Mol Wasser, 5,3 m Mol Aluminiumhydroxid in Form von Bayerit sowie 1,8 m Mol Bariumhydroxid beschickt und dicht verschlossen. Nach einer Reaktionsdauer von 1,5 Monaten bei 200 °C wurde abfiltriert, der Rückstand mit Wasser gewaschen und bei 120 °C getrocknet. Der hierbei entstandene Crandallit ist kristallin, besitzt die Zusammensetzung $BaAl_3 (PO_4)_2 \cdot (OH)_5 \cdot H_2O$ und ist in Salzsäure nicht löslich.

3. In 4 Liter einer Lösung, die 300 g/l Natriumnitrat, 0,19 g/l Strontiumnitrat, 0,6 g/l Europiumnitrat und 0,6 g/l Thoriumnitrat enthielt, wurden bei pH 8 bis 11 4,2 g Crandallit, hergestellt nach Beispiel 1, zugegeben und die Suspension 14 Tage auf 60 °C erhitzt. Nach dem Abfiltrieren wurde die Lösung analysiert und festgestellt, daß sich der Strontiumgehalt um mehr als 75 %, der Europiumgehalt um mehr als 99 % und der Thoriumgehalt ebenfalls um mehr als 99 % abgereichert hatte.

Der beladene Crandallit wurde in einer Soxleth-Apparatur 24 Stunden bei 100 °C mit entionisiertem Wasser ausgelaugt.

Dabei ergab sich eine Strontiumauflösung aus dem Crandallit von 0,06 bis 0,08 %, bezogen auf den Gesamt-Strontiumgehalt.

Nach entsprechender Konditionierung sind diese beladenen Crandallite sehr gut zur Endlagerung geeignet.

**Patentansprüche**

1. Verfahren zur Abtrennung von Kationen der Gruppen Erdalkalimetalle, Lanthaniden, Actiniden, Eisenmetalle, Titan Zirkonium Hafnium, Chrom, Molybdän, Wolfram, Vanadium Niob Tantal, Aluminium und Blei aus wässrigen Lösungen mit Hilfe einer mineralischen Verbindung, dadurch gekennzeichnet, daß als mineralische Verbindung ein Crandallit der allgemeinen Zusammensetzung $MeAl_3 (PO_4)_2 (OH)_5 \cdot H_2O$ (Me = Erdalkalimetall) bei pH-Werten oberhalb 6 und Temperaturen oberhalb 40 °C eingesetzt wird.

2. Verfahren nach Anspruch 1, dadurch gekennzeichnet, daß die Kationenabtrennung bei pH-Werten zwischen 8 und 11 erfolgt.

3. Verfahren nach Anspruch 1, dadurch gekennzeichnet, daß die Kationenabtrennung bei Temperaturen zwischen 50 und 70 °C erfolgt.

4. Verfahren nach einem der Ansprüche 1 bis 3, dadurch gekennzeichnet, daß synthetische Crandallite eingesetzt werden, hergestellt durch Umsetzung von Erdalkalihydroxiden bzw. von in wässrigen Lösungen Hydroxide bildenden Erdalkalisalzen und von Aluminiumhydroxid bzw. von hydroxidbildenden Aluminiumsalzen mit Phosphorsäure in den entsprechenden stöchiometrischen Mengenverhältnissen bei pH-Werten zwischen 6 und 12 und Temperaturen zwischen 40 und 80 °C.

5. Verfahren nach Anspruch 1 bis 4, dadurch gekennzeichnet, daß synthetisch Crandallite eingesetzt werden, hergestellt aus frischgefälltem Aluminiumhydroxid bei pH-Werten zwischen 8 und 11.

6. Verfahren nach einem der Ansprüche 1 bis 3, dadurch gekennzeichnet, daß synthetische Crandallite eingesetzt werden, hergestellt durch Umsetzung von Erdalkalihydroxiden bzw. von hydroxidbildenden Erdalkalisalzen und von Aluminiumhydroxid mit Phosphorsäure in den entsprechenden stöchiometrischen Mengenverhältnissen unter Druck bei pH-Werten zwischen 6 und 12 und Temperaturen zwischen 180 und 220 °C.

7. Verfahren nach Anspruch 1 und 6, dadurch gekennzeichnet, daß synthetische Crandallite eingesetzt werden, hergestellt aus Aluminiumhydroxid in Form von Bayerit.

**Claims**

1. A process for the separation of cations of the groups comprising alkaline earth metals, lanthanides, actinides, ferrous metals, titanium, zirconium, hafnium, chromium, molybdenum, tungsten, vanadium, niobium, tantalum, aluminium and lead from aqueous solutions using a mineral compound, characterized in that a crandallite having the general composition $MeAl_3 (PPO_4)_2(OH)_5 \cdot H_2O$ (Me = alkaline earth metal) is used as the mineral compound at pH values above 6 and at temperatures above 40 °C.

2. A process as claimed in claim 1, characterized in that the cations are separated off at pH values between 8 and 11.

3. A process as claimed in claim 1, characterized in that the cations are separated off at temperatures between 50 and 70 °C.

4. A process as claimed in any of claims 1 to 3, characterized in that synthetic crandallites prepared by reaction of alkaline earth hydroxides or alkaline earth salts which form hydroxides in aqueous solutions and aluminium hydroxide or hydroxide-forming aluminium salts with phosphoric acid in the corresponding stoichiometric quantitative ratios at pH values of 6 to 12 and at a temperatures of 40 to 80 °C are used.

5. A process as claimed in claims 1 to 4, characterized in that synthetic crandallites prepared from freshly precipitated aluminium hydroxide at pH values of 8 to 11 are used.

6. A process as claimed in any of claims 1 to 3, characterized in that synthetic crandallites prepared by reaction of alkaline earth hydroxides or hydroxide-forming alkaline earth salts and aluminium hydroxide with phosphoric acid in the corresponding stoichiometric quantitative ratios under pressure at pH values of 6 to 12 and at temperatures of 180 to 220 °C are used.

7. A process as claimed in claims 1 and 6, characterized in that synthetic crandallites prepared from aluminium hydroxide in the form of bayerite are used.

**Revendications**

1. Procédé de séparation de cations des groupes des métaux alcalino-terreux, des lanthanides, des actinides, des métaux ferreux, du titane, du Zirconium, de l'Hafnium, du Chrome, du Molybdène, du Tungstène, du Vanadium, du Niobium, du Tantale, de l'Aluminium et du Plomb à partir de solutions aqueuses à l'aide d'un composé minéralique, caractérisé en ce que, en tant que composé minéralique on met en œuvre une crandallite de composition générale $MeAl_3$, $(PO_4)_2(OH)_5 \cdot H_2O$ (Me = métal alcalino-terreux) à des valeurs de pH au-dessus de 6 et à des températures supérieures à 40 °C.

2. Procédé selon la revendication 1, caractérisé en ce que la séparation des cations s'effectue à des valeurs de pH comprises entre 8 et 11.

3. Procédé selon la revendication 1, caractérisé en ce que la séparation des cations s'effectue à des températures comprises entre 50 et 70 °C.

4. Procédé selon l'une des revendications 1 à 3, caractérisé en ce que des crandallites synthétiques sont mises en œuvre, obtenues par condensation d'hydroxydes de métaux alcalino-terreux ou de sels d'alcalino-terreux formant un hydroxyde en solutions aqueuses, et d'hydroxydes d'aluminium ou de sels d'aluminium qui forment de l'hydroxyde, avec l'acide phosphorique dans le rapport quantitatif correspondant stœchiométrique à des valeurs de pH comprises entre 6 et 12 et à des températures comprises entre 40 et 80 °C.

5. Procédé selon les revendications 1 à 4, caractérisé en ce que des crandallites synthétiques sont mises en jeu, obtenues à partir d'hydroxyde d'aluminium fraîchement précipité à des valeurs de pH comprises entre 8 et 11.

6. Procédé selon l'une quelconque des revendications 1 à 3, caractérisé en ce que des crandallites synthétiques sont mises en jeu, obtenues par condensation d'hydroxydes de métaux alcalino-terreux ou de sels d'alcalino-terreux qui forment de l'hydroxyde, et d'hydroxyde d'aluminium avec l'acide phosphorique dans le rapport quantitatif stœchiométrique correspondant avec l'acide phosphorique dans les rapports quantitatifs stœchiométriques correspondants sous pression, à des valeurs de pH comprises entre 6 et 12 et à des températures comprises entre 180° et 220°.

7. Procédé selon la revendication 1, caractérisé en ce que l'on met en œuvre des crandallites synthétiques obtenues à partir d'hydroxyde d'aluminium sous forme de bayerite.